# EUROPÄISCHE PATENTANMELDUNG

(11) **EP 4 575 421 A1**
(43) Veröffentlichungstag der Anmeldung: **25.06.2025**
(21) Anmeldenummer: 24211435.3
(22) Anmeldetag: 07.11.2024
(51) Int. Cl.: G01F 1/84, G01F 25/10

(54) **VERFAHREN ZUM BETREIBEN EINES CORIOLIS-MASSEDURCHFLUSSMESSGERÄTS UND ENTSPRECHENDES CORIOLIS-MASSEDURCHFLUSSMESSGERÄT**

(30) Priorität: 22.12.2023 DE 102023136442
(71) Anmelder: Krohne Messtechnik GmbH, 47058 Duisburg (DE)
(72) Erfinder: Erkelenz, Herr Alexander, 47447 Moers (DE); Kunze, Johannes, 45468 Mülheim (DE); Storm, Ralf, 45136 Essen (DE); Stegemann, Volker, 44791 Bochum (DE)
(74) Vertreter: Gesthuysen Patentanwälte

(57) **Zusammenfassung**

Beschrieben und dargestellt ist ein Verfahren (1) zum Betreiben eines Coriolis-Massedurchflussmessgeräts (2), wobei das Coriolis-Massedurchflussmessgerät (2) wenigstens ein Messrohr, wenigstens einen Schwingungserzeuger, wenigstens zwei Schwingungsaufnehmer (3a, 3b), wenigstens einen ersten und einen zweiten Multiplexer (4a, 4b) mit jeweils mehreren Betriebstellungen (WP) und wenigstens eine Steuer- und Auswerteeinheit (5) aufweist, wobei das Messrohr von einem Medium durchströmbar ist, wobei der Schwingungserzeuger das Messrohr zu einer Schwingung anregt, wobei der erste und der zweite Schwingungsaufnehmer (3a, 3b) die Schwingungen des Messrohrs einlaufseitig und auslaufseitig erfassen und als erstes Schwingungssignal (s1) und als zweites Schwingungssignal (s2) bereitstellen, wobei das erste Schwingungssignal (s1) über den ersten Multiplexer (4a) in einer Messbetriebstellung (WPM) des ersten Multiplexers (4a) zumindest mittelbar zu der Steuer- und Auswerteeinheit (5) übertragen wird, und wobei das zweite Schwingungssignal (s2) über den zweiten Multiplexer (4b) in einer Messbetriebstellung (WPM) des zweiten Multiplexers (4b) zumindest mittelbar zu der Steuer- und Auswerteeinheit (5) übertragen wird und wobei die Steuer- und Auswerteeinheit (5) eine Schwingungssignal-Phasendifferenz (Δφ) zwischen dem übertragenen ersten Schwingungssignal (st1) und dem übertragenen zweiten Schwingungssignal (st2) bestimmt und aus der Schwingungssignal-Phasendifferenz (Δφ) einen Massedurchfluss ermittelt.

Um gleichzeitig zum Test auf die gleichzeitige Messbetriebstellung des ersten Multiplexers (4a) und des zweiten Multiplexers (4b) auch den Messbetrieb fortsetzen zu können, wird das erste Schwingungssignal (s1) um einen Phasenhub (φh) phasenverschoben und das phasenverschobene erste Schwingungssignal (s1) wird über den ersten Multiplexer (4a) zumindest mittelbar zur Steuer- und Auswerteeinheit (5) übertragen und die Steuer- und Auswerteeinheit (5) ermittelt unter Berücksichtigung des um den Phasenhub (φh) verschobenen und übertragenen ersten Schwingungssignals (st1) den Massedurchfluss und die Steuer- und Auswerteeinheit (5) detektiert durch Vergleich der Schwingungssignal-Phasendifferenz (Δφ) mit dem Phasenhub (φh) des ersten Schwingungssignals (s1), ob eine Betriebstellung (MP) des ersten Multiplexers (4a) und eine Betriebstellung (MP) des zweiten Multiplexers (4b) gleichzeitig die Messbetriebstellung (WPM) sind.

## Beschreibung

Die Erfindung betrifft ein Verfahren zum Betreiben eines Coriolis-Massedurchflussmessgeräts, wobei das Coriolis-Massedurchflussmessgerät wenigstens ein Messrohr, wenigstens einen Schwingungserzeuger, wenigstens zwei Schwingungsaufnehmer, wenigstens einen ersten und einen zweiten Multiplexer mit jeweils mehreren Betriebstellungen und wenigstens eine Steuer- und Auswerteeinheit aufweist, wobei das Messrohr von einem Medium durchströmbar ist, wobei der Schwingungserzeuger das Messrohr zu einer Schwingung anregt, wobei der erste und der zweite Schwingungsaufnehmer die Schwingungen des Messrohrs einlaufseitig und auslaufseitig erfassen und als erstes Schwingungssignal und als zweites Schwingungssignal bereitstellen, wobei das erste Schwingungssignal über den ersten Multiplexer in einer Messbetriebstellung des ersten Multiplexers zumindest mittelbar zu der Steuer- und Auswerteeinheit übertragen wird, und wobei das zweite Schwingungssignal über den zweiten Multiplexer in einer Messbetriebstellung des zweiten Multiplexers zumindest mittelbar zu der Steuer- und Auswerteeinheit übertragen wird und wobei die Steuer- und Auswerteeinheit eine Schwingungssignal-Phasendifferenz zwischen dem übertragenen ersten Schwingungssignal und dem übertragenen zweiten Schwingungssignal bestimmt und aus der Schwingungssignal-Phasendifferenz einen Massedurchfluss ermittelt. Darüber hinaus betrifft die Erfindung auch ein entsprechendes Coriolis-Massedurchflussmessgerät, das im Betrieb das zuvor beschriebene Verfahren durchführt.

Coriolis-Massedurchflussmessgeräte sind seit Jahrzehnten aus dem Stand der Technik bekannt. Durch Nutzung des Coriolis-Effekts wird der Massedurchfluss eines Mediums durch das Messrohr bestimmt. Dazu wird das von dem Medium durchströmte Messrohr, wie oben beschrieben, durch wenigstens einen Schwingungserzeuger in Schwingung versetzt. Die Schwingung des Messrohrs wird in Strömungsrichtung gesehen ein- und auslaufseitig durch mit dem Messrohr in Wirkzusammenhang stehende Schwingungsaufnehmer erfasst und als Schwingungssignale bereitgestellt. Ohne Durchfluss sind die erfassten Schwingungen und bereitgestellten Schwingungssignale der beiden Schwingungsaufnehmer im theoretischen Idealfall phasengleich. Bei einem Massedurchfluss ergibt sich ein- und auslaufseitig eine unterschiedlich gerichtete Corioliskraft, die zu einer minimalen Phasenverschiebung zwischen den Auslenkungen und damit auch zwischen den beiden erfassten Schwingungen der Schwingungsaufnehmer führt. Deshalb resultiert in diesem Fall auch eine Schwingungssignal-Phasendifferenz zwischen den Schwingungssignalen der Schwingungsaufnehmer. Die Schwingungssignal-Phasendifferenz ist sehr klein, sie liegt typischerweise im Bereich von Bogenminuten, gleichwohl enthält sie die Information über den Massedurchfluss durch das Messrohr. Die Phasenverschiebung ist proportional zum Massedurchfluss innerhalb des Messrohres. Sie wird deshalb ausgewertet und aus ihr wird ein Massedurchfluss bestimmt.

Der Einsatz eines Multiplexers in jedem Messpfad, verlaufend jeweils von jedem der beiden Schwingungsaufnehmer zu der Steuer- und Messwerteeinheit, kann ganz unterschiedliche Gründe haben. Es kann beispielsweise gewünscht sein, die Messkanäle nicht nur zum Erfassen der von den Schwingungsaufnehmern gelieferten Schwingungssignale zu nutzen, sondern auch zur Erfassung anderer Messgrößen, die durch den Multiplexer in den angeschlossenen Messkanal eingespeist werden. Ein anderer Grund kann in einer zu realisierenden Umschaltung der Messkanäle liegen, bei der der erste Schwingungsaufnehmer auf den zweiten Messkanal und der zweite Schwingungsaufnehmer auf den ersten Messkanal geschaltet wird, um beispielsweise unterschiedliche Laufzeiten in den Messkanälen herausmitteln zu können.

Wenn es heißt, dass das erste Schwingungssignal und das zweite Schwingungssignal zumindest mittelbar über die Multiplexer zu der Steuer- und Auswerteeinheit übertragen werden, dann ist damit gemeint, dass ein originäres Schwingungssignal, das also unmittelbar von den Schwingungsaufnehmern stammt, beim Weg zu der Steuer- und Auswerteeinheit eine durchaus recht umfangreiche Signalverarbeitung erfahren kann, also beispielsweise analoge Verstärkung, Impedanzwandlung, analog/digital-Wandlung, Tiefpassfilterung, Phasendetektion usw. Dies ist im Einzelnen und im Detail jedoch nicht von Interesse, wichtig ist nur, dass ein Signal, das jedenfalls auf einer ursprünglich von dem Schwingungsaufnehmer erfassten Schwingung beruht, jeweils zu der Steuer- und Auswerteeinheit übertragen wird; dort angekommen wird es als übertragenes Schwingungssignal bezeichnet.

Die Multiplexer sind demnach im Anfangsbereich der Messkette - üblicherweise im Signalverlauf direkt hinter den Schwingungsaufnehmern - angeordnet, also in dem Bereich der Messstrecke, die mit analogen Signalen arbeitet. Bei den Multiplexern handelt es sich deshalb üblicherweise auch um analoge Multiplexer. Die Multiplexer haben mehrere Betriebstellungen, die definieren, welcher Eingang des Multiplexers auf einen Ausgang des Multiplexers geschaltet wird. Gerade bei mechanisch realisierten analogen Multiplexern, die speziell in der Messtechnik bevorzugt mit vergoldeten Schaltkontakten verwendet werden, um durch die Multiplexer verursachte Widerstände in den Messpfaden zu minimieren, kann es vorkommen, dass ein Wechsel zwischen verschiedenen Betriebstellungen nicht erfolgreich durchgeführt wird.

Im Stand der Technik ist es daher bekannt, zu überprüfen, ob sich die beiden Multiplexer gemeinsam jeweils in der Messbetriebstellung befinden, ob also der erste Multiplexer das Schwingungssignal des ersten Schwingungsaufnehmers durchleitet und der zweite Multiplexer das Schwingungssignal des zweiten Schwingungsaufnehmers durchleitet. Dazu wird ein harmonisches Testsignal anstelle der Schwingungssignale der Schwingungsaufnehmer auf den Messkanaleingang geschaltet, an dem die Schwingungsaufnehmer angeschlossen sind, sodass von der Steuer- und Auswerteeinheit erkannt werden kann, ob dieses Testsignal auf beiden Messkanälen erhalten wird, was die Messbetriebstellung beider Multiplexer voraussetzt. Der Nachteil dieser Vorgehensweise besteht darin, dass der Messbetrieb des Coriolis-Massedurchflussmessgeräts ausgesetzt werden muss, solange die korrekte Betriebstellung der Multiplexer überprüft wird, was natürlich eine Einschränkung des Messbetriebs darstellt.

Aufgabe der vorliegenden Erfindung ist es daher, ein Verfahren anzugeben, mit dem überprüft werden kann, ob sich die Multiplexer gleichzeitig in Messbetriebstellung befinden oder nicht, ohne dabei den Messbetrieb zu unterbrechen.

Die zuvor hergeleitete Aufgabe wird bei dem eingangs beschriebenen Verfahren zum Betreiben eines Coriolis-Massedurchflussmessgeräts gelöst mit den Merkmalen des Kennzeichnungsteils des unabhängigen Patentanspruchs 1, nämlich dadurch, dass das erste Schwingungssignal um einen Phasenhub phasenverschoben wird und das phasenverschobene erste Schwingungssignal über den ersten Multiplexer zumindest mittelbar zur Steuer- und Auswerteeinheit übertragen wird und die Steuer- und Auswerteeinheit unter Berücksichtigung des um den Phasenhub verschobenen und übertragenen ersten Schwingungssignals den Massedurchfluss ermittelt und dass die Steuer- und Auswerteeinheit durch Vergleich der Schwingungssignal-Phasendifferenz mit dem Phasenhub des ersten Schwingungssignals detektiert, ob eine Betriebstellung des ersten Multiplexers und eine Betriebstellung des zweiten Multiplexers gleichzeitig die Messbetriebstellung sind.

Mit der beschriebenen Vorgehensweise ist es auf einfache Weise möglich, zu erkennen, ob sich der erste Multiplexer und der zweite Multiplexer gleichzeitig in der Messbetriebstellung befinden oder nicht, und zwar ohne den Messbetrieb des Coriolis-Massedurchflussmessgeräts zu unterbrechen.

Gemäß einer bevorzugten Ausgestaltung des Verfahrens ist vorgesehen, dass der Phasenhub, um den das erste Schwingungssignal phasenverschoben wird, erheblich größer ist als eine maximale Mess-Phasendifferenz, die durch einen im Messbereich liegenden Massedurchfluss bewirkt werden kann. Vorzugsweise ist der Phasenhub wenigstens um einen Faktor zehn, weiter bevorzugt um wenigstens einen Faktor hundert größer gewählt als die maximale Mess-Phasendifferenz. Die Mess-Phasendifferenzen liegen üblicherweise nur im Bereich des Bruchteils eines Grades. Wenn von Betriebsfrequenzen des Coriolis-Massedurchflussmessgeräts im Bereich von einem kHz ausgegangen wird, dann wird deutlich, dass eine typische Mess-Phasendifferenz gleichbedeutend ist mit einer Detektion von Zeitdifferenzen im Bereich von wenigen Mikrosekunden (und auch unterhalb dieses Zeitbereichs).

Bei einer bevorzugten Ausgestaltung des Verfahrens beträgt der Phasenhub des ersten Schwingungssignals 180°, was beispielsweise relativ einfach durch eine analoge Inverterschaltung realisiert werden kann. Bei einer besonders bevorzugten Ausgestaltung des Verfahrens wird der 180°-Phasenhub des ersten Schwingungssignals dadurch realisiert, dass der erste und der zweite Schwingungsaufnehmer so montiert oder angeschlossen werden, dass die von ein und derselben Schwingung des Messrohrs (also bei Nulldurchfluss) verursachten Schwingungssignale 180° phasenverschoben sind. Dies lässt sich dadurch erzielen, indem beispielsweise Spulen als Schwingungsaufnehmer umgekehrt orientiert an dem Messrohr angebracht werden, sodass ein und dieselbe Bewegung des Messrohrs an sinngemäß gleichen Anschlüssen der Schwingungsaufnehmer genau gegenläufige Schwingungssignale erzeugen, oder indem Spulen als Schwingungsaufnehmer zwar gleichorientiert an dem Messrohr angebracht werden, die Anschlüsse der ersten Spule als erster Schwingungsaufnehmer aber vertauscht mit Anschlüssen des ersten Multiplexers verbunden werden im Vergleich zu der Verbindung der Anschlüsse der zweiten Spule als zweiter Schwingungsaufnehmer mit den Anschlüssen des zweiten Multiplexers. Bei den beiden zuletzt aufgezeigten Lösungsvarianten besteht der Vorteil darin, dass kein zusätzlicher schaltungstechnischer Aufwand betrieben werden muss.

Wenn es heißt, dass die Steuer- und Auswerteeinheit unter Berücksichtigung des um den Phasenhub verschobenen und übertragenen ersten Schwingungssignals den Massedurchfluss ermittelt, dann ist damit gemeint, dass der Phasenhub aus der Schwingungssignal-Phasendifferenz oder aus einer ermittelten Phase des ersten übertragenen Schwingungssignals herausgerechnet wird, und mit der so korrigierten Schwingungssignal-Phasendifferenz der Massedurchfluss ermittelt wird.

Durch die Steuer- und Auswerteeinheit wird die gleichzeitige Messbetriebstellung des ersten Multiplexers und des zweiten Multiplexers vorzugsweise dann detektiert, wenn die Schwingungssignal-Phasendifferenz - also die nicht korrigierte Schwingungssignal-Phasendifferenz, in der der Phasenhub des ersten übertragenen Schwingungssignals noch vorhanden ist - in einem Toleranzband um den Phasenhub des ersten Schwingungssignals liegt. Vorzugsweise hat das Toleranzband die Breite der maximalen Mess-Phasendifferenz, da eine Variation des Phasenhubs in diesem Bereich alleine durch die weiter erfolgende Messung möglich ist.

Bei einer vorteilhaften Weiterbildung des Verfahrens vergleicht die Steuerund Auswerteeinheit die detektierten Betriebstellungen des ersten Multiplexers und des zweiten Multiplexers - erster Multiplexer und zweiter Multiplexer gleichzeitig in Messbetriebstellung oder nicht - mit vorgegebenen Soll-Betriebstellungen des ersten Multiplexers und des zweiten Multiplexers - Soll-Betriebstellung des ersten Multiplexers und Soll-Betriebstellung des zweiten Multiplexers gleichzeitig in Messbetriebstellung oder nicht - und bei Abweichung der detektierten Betriebstellungen von den Soll-Betriebstellungen signalisiert die Steuer- und Auswerteeinheit ein Abweichungssignal.

Das zuvor genannte Abweichungssignal wird bei einer Ausgestaltung als Information in einem Speicher der Steuer- und Auswerteeinheit abgelegt und/oder das Abweichungssignal wird mit einer Busnachricht über eine Feldbusschnittstelle des Coriolis-Massedurchflussmessgeräts ausgegeben und/oder das Abweichungssignal wird mit einer Busnachricht über eine Diagnoseschnittstelle, über die keine Messdaten ausgegeben werden, ausgegeben und/oder das Abweichungssignal wird codiert als Stromwert über eine Stromschnittstelle des Coriolis-Massedurchflussmessgeräts ausgegeben.

Die zuvor genannte Aufgabe wird ebenfalls gelöst bei dem zuvor schon mehrfach beschriebenen Coriolis-Massedurchflussmessgerät, dadurch dass das erste Schwingungssignal um einen Phasenhub phasenverschoben wird und das phasenverschobene erste Schwingungssignal über den ersten Multiplexer zumindest mittelbar zur Steuer- und Auswerteeinheit übertragen wird und die Steuer- und Auswerteeinheit unter Berücksichtigung des um den Phasenhub verschobenen und übertragenen ersten Schwingungssignals den Massedurchfluss ermittelt und dass die Steuer- und Auswerteeinheit durch Vergleich der Schwingungssignal-Phasendifferenz mit dem Phasenhub des ersten Schwingungssignals detektiert, ob eine Betriebstellung des ersten Multiplexers und eine Betriebstellung des zweiten Multiplexers gleichzeitig die Messbetriebstellung sind.

Das Coriolis-Massedurchflussmessgerät führt im Übrigen mit einer entsprechend ausgestalteten Steuer- und Auswerteeinheit die verschiedenen Ausgestaltungen des zuvor beschriebenen Verfahrens durch. Bevorzugt ist das Coriolis-Massedurchflussmessgerät so ausgestaltet, dass der Phasenhub 180° beträgt und dadurch realisiert ist, dass der erste Schwingungsaufnehmer und der zweite Schwingungsaufnehmer so montiert oder angeschlossen sind, dass die von ein und derselben Schwingung des Messrohrs verursachten Schwingungssignale 180° phasenverschoben sind, insbesondere indem Spulen als Schwingungsaufnehmer umgekehrt orientiert an dem Messrohr angebracht sind oder indem Spulen als Schwingungsaufnehmer zwar gleichorientiert an dem Messrohr angebracht sind, die Anschlüsse der ersten Spule als erster Schwingungsaufnehmer aber vertauscht mit Anschlüssen des ersten Multiplexers verbunden sind im Vergleich zu der Verbindung der Anschlüsse der zweiten Spule als zweiter Schwingungsaufnehmer mit den Anschlüssen des zweiten Multiplexers.

Im Einzelnen gibt es nun verschiedene Möglichkeiten, das erfindungsgemäße Verfahren zum Betrieb eines Coriolis-Massedurchflussmessgeräts und das entsprechende Coriolis-Massedurchflussmessgerät auszugestalten und weiterzubilden. Dazu wird verwiesen auf die den unabhängigen Patentansprüchen nachgeordneten Patentansprüche und auf die Beschreibung bevorzugter Ausführungsbeispiele in Verbindung mit der Zeichnung. In der Zeichnung zeigen:
- Fig. 1: schematisch ein aus dem Stand der Technik bekanntes Verfahren zum Betreiben eines Coriolis-Massedurchflussmessgeräts und ein entsprechendes Coriolis-Massedurchflussmessgerät mit der Möglichkeit zum Überprüfen der Betriebstellung von Multiplexern bei Aussetzen des Messbetriebs,
- Fig. 2: schematisch ein Verfahren zum Betreiben eines Coriolis-Massedurchflussmessgeräts und ein entsprechendes Coriolis-Massedurchflussmessgerät mit der Möglichkeit zum Überprüfen der Betriebstellung von Multiplexern bei gleichzeitig fortgesetztem Messbetrieb und
- Fig. 3: schematisch ein Verfahren zum Betreiben eines Coriolis-Massedurchflussmessgeräts und ein entsprechendes Coriolis-Massedurchflussmessgerät bei dem ein Phasenhub von 180° sehr einfach implementiert ist.

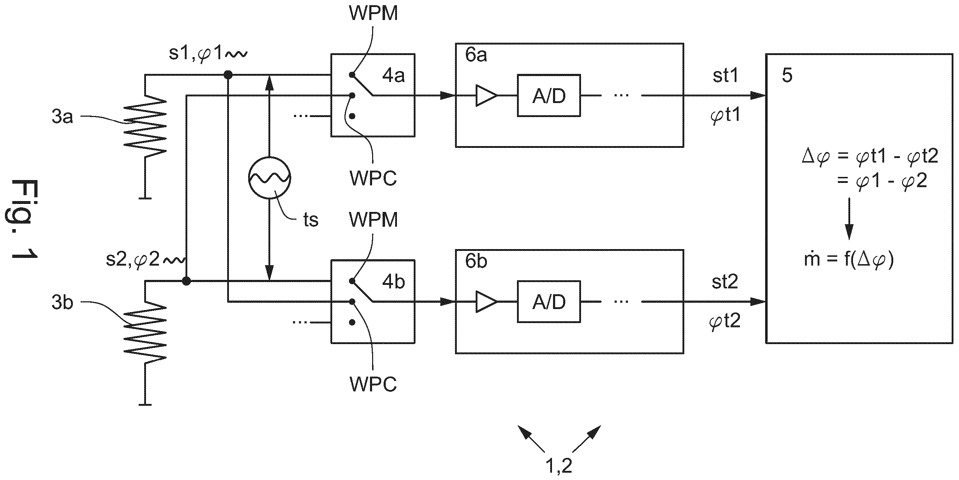

In den Fig. 1 bis 3 sind jeweils Verfahren 1 zum Betreiben eines Coriolis-Massedurchflussmessgeräts 2 und bestimmte gegenständliche Aspekte eines Coriolis-Massedurchflussmessgeräts 2, die nachfolgend von Interesse für das Verständnis des Erfindungsgegenstandes sind, dargestellt. Das Coriolis-Massedurchflussmessgerät 2 weist funktionsnotwendig wenigstens ein Messrohr und wenigstens einen Schwingungserzeuger auf, der das Messrohr zu einer harmonischen Schwingung, meist in der Grundmode des Messrohrs, anregt; beide Elemente sind aus Gründen der Übersichtlichkeit nicht dargestellt. Die hier betrachteten Coriolis-Massedurchflussmessgeräte 2 weisen ferner wenigstens zwei Schwingungsaufnehmer 3a, 3b, wenigstens einen ersten und einen zweiten Multiplexer 4a, 4b mit jeweils mehreren Betriebstellungen WP, und wenigstens eine Steuer- und Auswerteeinheit 5 auf.

Das Messrohr wird im Betrieb des Coriolis-Massedurchflussmessgeräts 2 von einem Medium durchströmt, wobei der erste und der zweite Schwingungsaufnehmer 3a, 3b, hier dargestellt als Spulen, die Schwingungen des Messrohrs einlaufseitig und auslaufseitig erfassen und als erstes Schwingungssignal s1 und als zweites Schwingungssignal s2 bereitstellen. Das erste Schwingungssignal s1 hat eine Phasenlage φ1, das zweite Schwingungssignal s2 hat eine Phasenlage φ2. In den Figuren werden als Bezugszeichen sowohl Zahlen als auch Buchstaben verwendet. Die Buchstaben haben nur den Charakter von Bezugszeichen, sie erleichtern aber das Verständnis und die Herstellung des Zusammenhangs von Beschreibung und Zeichnung erheblich.

Das erste Schwingungssignal s1 wird über den ersten Multiplexer 4a in einer Messbetriebstellung WPM des ersten Multiplexers 4a mittelbar zu der Steuerund Auswerteeinheit 5 übertragen und das zweite Schwingungssignal s2 wird über den zweiten Multiplexer 4b in einer Messbetriebstellung WPM des zweiten Multiplexers 4b mittelbar zu der Steuer- und Auswerteeinheit 5 übertragen. Die Formulierung "mittelbar übertragen" trägt dem Umstand Rechnung, dass das von den Schwingungsaufnehmern 3a, 3b bereitgestellte erste Schwingungssignal s1 und das zweite Schwingungssignal s2 eine weitergehende Signalverarbeitung erfahren können, bis die Schwingungssignale s1, s2 dann letztendlich bei der Steuer- und Auswerteeinheit 5 ankommen. Das erste Schwingungssignal s1 und das zweite Schwingungssignal s2 erfahren also unter Umständen eine Umwandlung, auf die es hier im Einzelnen jedoch nicht ankommt. Letztlich kommt bei der Steuer- und Auswerteeinheit 5 jedenfalls das erste Schwingungssignal s1 als erstes übertragenes Schwingungssignal st1 mit der Phasenlage φt1 an, und das zweite Schwingungssignal s2 kommt bei der Steuer- und Auswerteeinheit 5 letztlich als zweites übertragenes Schwingungssignal st2 mit der Phasenlage φt2 an. Die Steuer- und Auswerteeinheit 5 bestimmt dann eine Schwingungssignal-Phasendifferenz Δφ zwischen dem übertragenen ersten Schwingungssignal st1 und dem übertragenen zweiten Schwingungssignal st2, und aus der Schwingungssignal-Phasendifferenz Δφ wird schließlich ein Massedurchfluss ermittelt, in den Figuren dargestellt als m-punkt, also als zeitliche Veränderung der das Messrohr durchströmenden Masse.

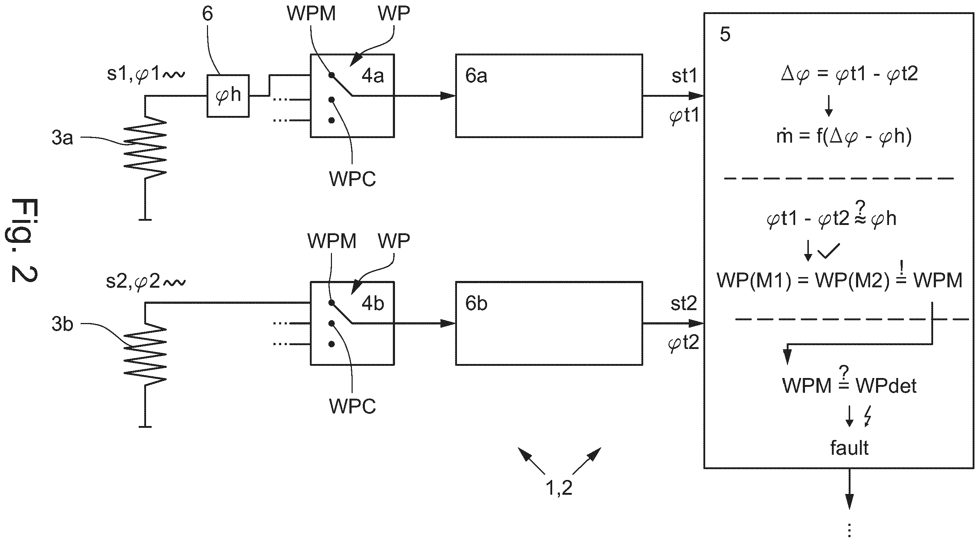

In Fig. 1 ist in Zusammenhang mit der Steuer- und Auswerteeinheit 5 idealisiert dargestellt, dass die Phasendifferenz Δφ zwischen der Phasenlage φt1 des ersten übertragenen Schwingungssignals st1 und der Phasenlage φt2 des zweiten übertragenen Schwingungssignals st2 gleicht der Differenz zwischen den Phasenlagen φ1 des ersten Schwingungssignals s1 und der Phasenlage φ2 des zweiten Schwingungssignals st2 ist. In der Praxis muss dies - aufgrund von Störeffekten - nicht so sein, jedoch kommt es darauf bei dem Gegenstand des hier eigentlich interessierenden Verfahrens nicht an. In den Fig. 1 und 2 ist die Signalverarbeitung, die das erfasste erste Schwingungssignal s1 und das erfasste zweite Schwingungssignal s2 durchlaufen, schematisch als Messkanäle 6a, 6b dargestellt.

Die Multiplexer 4a, 4b sind als analoge Multiplexer ausgeführt. Bei derartigen Multiplexern besteht eine Fehlermöglichkeit darin, dass die Umschaltung zwischen verschiedenen Betriebstellungen WP der Multiplexer nicht ausgeführt wird. Wie im allgemeinen Beschreibungsteil bereits erwähnt, dienen die Multiplexer 4a, 4b dazu, verschiedene Messsignale auf die Messkanäle 6a, 6b zu schalten. In der Messbetriebstellung WPM wird das erste Schwingungssignal s1 über den ersten Messkanal 6a zu der Steuer- und Auswerteeinheit 5 weitergeleitet und es wird das zweite Schwingungssignal s2 über den zweiten Messkanal 6b ebenfalls zu der Steuer- und Auswerteeinheit 5 weitergeleitet.

Dargestellt ist eine weitere Betriebstellung WP der Multiplexer 4a, 4b die eine Wechsel-Betriebstellung WPC realisiert, bei der das erste Schwingungssignal s1 auf den zweiten Messkanal 6b und das zweite Schwingungssignal s2 auf den ersten Messkanal 6a geschaltet wird. Dies dient beispielsweise der Beseitigung von Laufzeitunterschieden in den verschiedenen Messkanälen 6a, 6b, meist rechnerisch in der Steuer- und Auswerteeinheit 5. Dargestellt ist ferner eine weitere Betriebsstellung WP der Multiplexer 4a, 4b, bei der beispielsweise noch andere Messsignale auf die Messkanäle 6a, 6b geleitet werden können, was in den Figuren nicht weiter detailliert ist.

In dem in Fig. 1 dargestellten Stand der Technik ist eine Möglichkeit dargestellt, zu überprüfen, ob sich die Multiplexer 4a, 4b in ihrer Messbetriebstellung WPM befinden. Es wird also überprüft, ob sich die beiden Multiplexer 4a, 4b gemeinsam in der Messbetriebstellung WPM befinden, ob also der erste Multiplexer 4a das Schwingungssignal s1 des ersten Schwingungsaufnehmers 3a durchleitet und ob der zweite Multiplexer 4b das Schwingungssignal s2 des zweiten Schwingungsaufnehmers 3b zur Steuer- und Auswerteeinheit 5 durchleitet. Dazu wird ein harmonisches Testsignal ts anstelle der Schwingungssignale s1, s2 der Schwingungsaufnehmer 3a, 3b auf den Eingang des dem jeweiligen Messkanal 6a, 6b vorgeschalteten Multiplexers 4a, 4b geschaltet, sodass von der Steuer- und Auswerteeinheit 5 erkannt werden kann, ob dieses Testsignal ts auf beiden Messkanälen 6a, 6b erhalten wird. In Fig. 1 ist nicht detailliert dargestellt, dass dazu möglicherweise noch andere schaltungstechnische Maßnahmen erforderlich sind, um eine Entkopplung der Schwingungsaufnehmer 3a, 3b von den Eingängen der Multiplexer 4a, 4b zu realisieren; darauf kommt es hier aber auch nicht an. Der Nachteil dieser Vorgehensweise besteht darin, dass der Messbetrieb des Coriolis-Massedurchflussmessgeräts 2 ausgesetzt werden muss, solange die korrekte Betriebstellung WP der Multiplexer 4a, 4b überprüft wird, was natürlich eine Einschränkung des Messbetriebs darstellt.

Bei dem Ausführungsbeispiel des Verfahrens 1 und des Coriolis-Massedurchflussmessgeräts 2 gemäß Fig. 2 wird anders vorgegangen. Das erste Schwingungssignal s1 wird um einen Phasenhub φh mittels eines Phasenschiebers 6 phasenverschoben und das phasenverschobene erste Schwingungssignal s1 wird über den ersten Multiplexer 4a - wiederum zumindest mittelbar - zur Steuer- und Auswerteeinheit 5 übertragen. Die Steuer- und Auswerteeinheit 5 ermittelt unter Berücksichtigung - also zum Beispiel unter Herausrechnung - des um den Phasenhub φh verschobenen und übertragenen ersten Schwingungssignals st1 den Massedurchfluss und kommt damit der primären Aufgabe des Coriolis-Massedurchflussmessgeräts 2 nach. Bei der in Fig. 2 angegebenen Rechnung ist auch vereinfachend wieder davon ausgegangen worden, dass die Phasenlagen φ1, φ2 der Schwingungssignale s1, s2 (jedenfalls relativ zueinander) ideal erhalten bleiben in den übertragenen Schwingungssignalen st1, st2.

Von Interesse ist hier, dass die Steuer- und Auswerteeinheit 5 durch Vergleich der Schwingungssignal-Phasendifferenz Δφ mit dem Phasenhub φh des ersten Schwingungssignals s1 detektiert, ob eine Betriebstellung WP des ersten Multiplexers 4a und eine Betriebstellung WP des zweiten Multiplexers 4b gleichzeitig die Messbetriebstellung WPM sind (WP(M1) = WP(M2) = WPM; in Fig. 2 stehen M1, M2 für den ersten und den zweiten Multiplexer 4a, 4b. Gegenüber dem Verfahren 1 aus dem Stand der Technik gemäß Fig. 1 kann dies aber klar erkennbar geschehen, während gleichzeitig die Durchflussmessung ausgeführt wird, was eine erhebliche Verbesserung des Betriebsverhaltens darstellt.

Der Phasenhub φh, um den das erste Schwingungssignal s1 phasenverschoben wird, ist erheblich größer gewählt als eine maximale Mess-Phasendifferenz, die durch einen im Messbereich liegenden Massedurchfluss bewirkt werden kann. Der Phasenhub φh ist hier um einen Faktor größer hundert größer gewählt als die maximale Mess-Phasendifferenz. Genauer beträgt in dem Ausführungsbeispiel gemäß Fig. 2 der Phasenhub cph des ersten Schwingungssignals s1 180°, was einfach durch einen analogen Inverter realisiert wird.

In dem Ausführungsbeispiel gemäß Fig. 2 ist tatsächlich umgesetzt, dass die gleichzeitige Messbetriebstellung WPM des ersten Multiplexers 4a und des zweiten Multiplexers 4b durch die Steuer- und Auswerteeinheit 5 dann detektiert wird, wenn die Schwingungssignal-Phasendifferenz Δφ in einem Toleranzband um den Phasenhub φh des ersten Schwingungssignals s 1 liegt, wobei das Toleranzband die Breite der maximalen Mess-Phasenverschiebung hat. Dadurch wird sichergestellt, dass Phasenabweichungen im Bereich möglicher Mess-Phasenabweichungen toleriert werden.

Bei dem Verfahren 1 und dem Coriolis-Massedurchflussmessgerät 2 gemäß Fig. 2 ist ferner umgesetzt, dass die Steuer- und Auswerteeinheit 5 die detektierten Betriebstellungen WP des ersten Multiplexers 4a und des zweiten Multiplexers 4b - erster Multiplexer 4a und zweiter Multiplexer 4b gleichzeitig in Messbetriebstellung WPM oder nicht -, mit vorgegebenen Soll-Betriebstellungen WPdet des ersten Multiplexers 4a und des zweiten Multiplexers 4b vergleicht - Soll-Betriebstellung WPdet des ersten Multiplexers 4a und Soll-Betriebstellung WPdet des zweiten Multiplexers 4b gleichzeitig in Messbetriebstellung WPM oder nicht - und bei Abweichung der detektierten Betriebstellungen WP von den Soll-Betriebstellungen WPdet voneinander ein Abweichungssignal fault signalisiert.

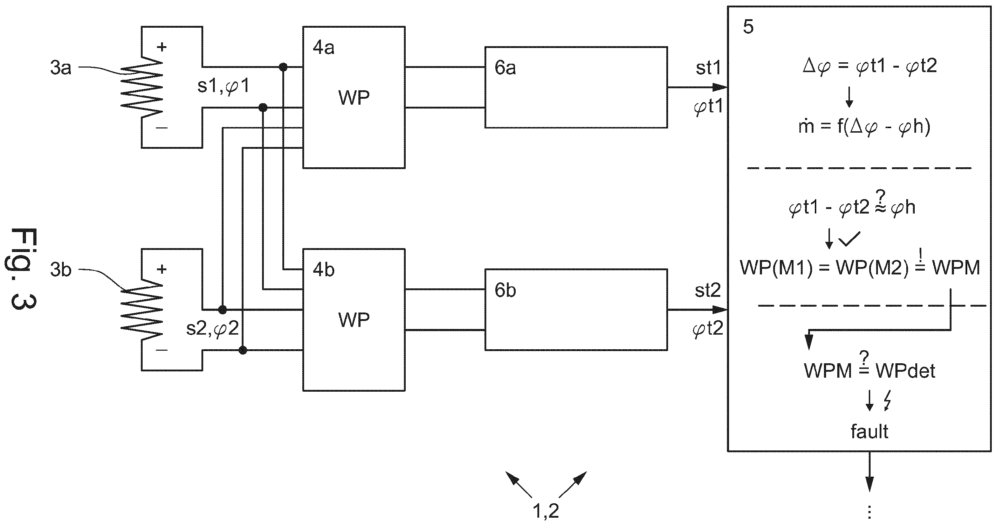

Bei dem Verfahren 1 und dem Coriolis-Massedurchflussmessgerät 2 gemäß Fig. 3 wird ein Phasenhub φh von 180° realisiert, und zwar auf sehr einfach Weise. Wie im Ausführungsbeispiel von Fig. 2 sind die Schwingungsaufnehmer 3a, 3b als Spulen realisiert. Beide Anschlüsse der Spulen werden über die als Doppel-Multiplexer ausgeführten Multiplexer 4 geführt, die Schwingungssignale sind hier also differentielle Signale; der Übersichtlichkeit halber sind die Multiplexer nicht als innere Schaltung dargestellt. Der erste Schwingungsaufnehmer 3a und der zweite Schwingungsaufnehmer 3b sind so montiert, dass die von ein und derselben Schwingung des Messrohrs verursachten Schwingungssignale 180° phasenverschoben sind. Die Spulen sind umgekehrt orientiert an dem Messrohr angebracht, angedeutet durch die unterschiedlichen Vorzeichen an den Spulenanschlüssen.

Eine vergleichbare Lösung, die hier nicht dargestellt ist, kann realisiert werden mit Spulen als Schwingungsaufnehmern 3a, 3b, die zwar gleichorientiert an dem Messrohr angebracht sind, wobei jedoch die Anschlüsse der ersten Spule als erster Schwingungsaufnehmer 3a vertauscht mit Anschlüssen des ersten Multiplexers 4a verbunden sind im Vergleich zu der Verbindung der Anschlüsse der zweiten Spule als zweiter Schwingungsaufnehmer 3b mit den Anschlüssen des zweiten Multiplexers 4b.

### Bezugszeichen

- 1: Verfahren
- 2: Coriolis-Massedurchflussmessgerät
- 3a, 3b: Schwingungsaufnehmer
- 4a, 4b: erster und zweiter Multiplexer
- 5: Steuer- und Auswerteeinheit
- 6: Phasenschieber

- s1, s2: erstes und zweites Schwingungssignal
- φ1, φ2: Phasenlage des ersten und zweiten Schwingungssignals
- st1, st2: erstes und zweites übertragenes Schwingungssignal
- φt1, φt2: Phasenlage des ersten und zweiten übertragenen Schwingungssignals
- Δφ: Schwingungssignal-Phasendifferenz
- WP: Betriebstellung eines Multiplexers
- WPM: Messbetriebstellung eines Multiplexers
- ts: Testsignal
- WPC: Wechsel-Messbetriebstellung eines Multiplexers
- WPdet: Soll-Betriebstellung eines Multiplexers
- fault: Abweichungssignal

## Patentansprüche

1. Verfahren (1) zum Betreiben eines Coriolis-Massedurchflussmessgeräts (2), wobei das Coriolis-Massedurchflussmessgerät (2) wenigstens ein Messrohr, wenigstens einen Schwingungserzeuger, wenigstens zwei Schwingungsaufnehmer (3a, 3b), wenigstens einen ersten und einen zweiten Multiplexer (4a, 4b) mit jeweils mehreren Betriebstellungen (WP) und wenigstens eine Steuer- und Auswerteeinheit (5) aufweist, wobei das Messrohr von einem Medium durchströmbar ist, wobei der Schwingungserzeuger das Messrohr zu einer Schwingung anregt, wobei der erste und der zweite Schwingungsaufnehmer (3a, 3b) die Schwingungen des Messrohrs einlaufseitig und auslaufseitig erfassen und als erstes Schwingungssignal (s1) und als zweites Schwingungssignal (s2) bereitstellen, wobei das erste Schwingungssignal (s1) über den ersten Multiplexer (4a) in einer Messbetriebstellung (WPM) des ersten Multiplexers (4a) zumindest mittelbar zu der Steuer- und Auswerteeinheit (5) übertragen wird, und wobei das zweite Schwingungssignal (s2) über den zweiten Multiplexer (4b) in einer Messbetriebstellung (WPM) des zweiten Multiplexers (4b) zumindest mittelbar zu der Steuer- und Auswerteeinheit (5) übertragen wird und wobei die Steuer- und Auswerteeinheit (5) eine Schwingungssignal-Phasendifferenz (Δφ) zwischen dem übertragenen ersten Schwingungssignal (st1) und dem übertragenen zweiten Schwingungssignal (st2) bestimmt und aus der Schwingungssignal-Phasendifferenz (Δφ) einen Massedurchfluss ermittelt,
**dadurch gekennzeichnet,**
**dass** das erste Schwingungssignal (s1) um einen Phasenhub (cph) phasenverschoben wird und das phasenverschobene erste Schwingungssignal (s1) über den ersten Multiplexer (4a) zumindest mittelbar zur Steuer- und Auswerteeinheit (5) übertragen wird und die Steuer- und Auswerteeinheit (5) unter Berücksichtigung des um den Phasenhub (cph) verschobenen und übertragenen ersten Schwingungssignals (st1) den Massedurchfluss ermittelt und dass die Steuerund Auswerteeinheit (5) durch Vergleich der Schwingungssignal-Phasendifferenz (Δφ) mit dem Phasenhub (φh) des ersten Schwingungssignals (s1) detektiert, ob eine Betriebstellung (MP) des ersten Multiplexers (4a) und eine Betriebstellung (MP) des zweiten Multiplexers (4b) gleichzeitig die Messbetriebstellung (WPM) sind.

2. Verfahren (1) nach Anspruch 1, **dadurch gekennzeichnet, dass** der Phasenhub (φh), um den das erste Schwingungssignal (s1) phasenverschoben wird, erheblich größer ist als eine maximale Mess-Phasendifferenz, die durch einen im Messbereich liegenden Massedurchfluss bewirkt werden kann, insbesondere wobei der Phasenhub (φh) wenigstens um einen Faktor zehn, besonders bevorzugt um wenigstens einen Faktor hundert größer gewählt wird als die maximale Mess-Phasendifferenz.

3. Verfahren (1) nach Anspruch 1 oder 2, **dadurch gekennzeichnet, dass** der Phasenhub (cph) des ersten Schwingungssignals (s1) 180° beträgt, insbesondere wobei der Phasenhub (cph) durch einen analogen Inverter realisiert wird.

4. Verfahren (1) nach Anspruch 3, **dadurch gekennzeichnet, dass** der 180°-Phasenhub (φh) des ersten Schwingungssignals (s1) dadurch realisiert wird, dass der erste Schwingungsaufnehmer (3a) und der zweite Schwingungsaufnehmer (3b) so montiert oder angeschlossen werden, dass die von ein und derselben Schwingung des Messrohrs verursachten Schwingungssignale 180° phasenverschoben sind, insbesondere indem Spulen als Schwingungsaufnehmer (3a, 3b) umgekehrt orientiert an dem Messrohr angebracht werden oder indem Spulen als Schwingungsaufnehmer (3a, 3b) zwar gleichorientiert an dem Messrohr angebracht werden, die Anschlüsse der ersten Spule als erster Schwingungsaufnehmer (3a) aber vertauscht mit Anschlüssen des ersten Multiplexers (4a) verbunden werden im Vergleich zu der Verbindung der Anschlüsse der zweiten Spule als zweiter Schwingungsaufnehmer (3b) mit den Anschlüssen des zweiten Multiplexers (4b).

5. Verfahren (1) nach einem der Ansprüche 1 bis 4, **dadurch gekennzeichnet, dass** die gleichzeitige Messbetriebstellung (WPM) des ersten Multiplexers (4a) und des zweiten Multiplexers (4b) durch die Steuer- und Auswerteeinheit (5) dann detektiert wird, wenn die Schwingungssignal-Phasendifferenz (Δφ) in einem Toleranzband um den Phasenhub (φh) des ersten Schwingungssignals (s1) liegt, insbesondere wobei das Toleranzband die Breite der maximalen Mess-Phasenverschiebung hat.

6. Verfahren (1) nach einem der Ansprüche 1 bis 5, **dadurch gekennzeichnet, dass** die Steuer- und Auswerteeinheit (5) die detektierten Betriebstellungen (WP) des ersten Multiplexers (4a) und des zweiten Multiplexers (4b) - erster Multiplexer (4a) und zweiter Multiplexer (4b) gleichzeitig in Messbetriebstellung (WPM) oder nicht -, mit vorgegebenen Soll-Betriebstellungen (WPdet) des ersten Multiplexers (4a) und des zweiten Multiplexers (4b) vergleicht - Soll-Betriebstellung (WPdet) des ersten Multiplexers (4a) und Soll-Betriebstellung (WPdet) des zweiten Multiplexers (4b) gleichzeitig in Messbetriebstellung (WPM) oder nicht - und bei Abweichung der detektierten Betriebstellungen (WP) von den Soll-Betriebstellungen (WPdet) voneinander ein Abweichungssignal (fault) signalisiert.

7. Verfahren (1) nach Anspruch 6, **dadurch gekennzeichnet, dass** das Abweichungssignal (fault) als Information in einem Speicher der Steuer- und Auswerteeinheit (5) abgelegt wird, und/oder dass das Abweichungssignal (fault) mit einer Busnachricht über eine Feldbusschnittstelle des Coriolis-Massedurchflussmessgeräts (2) ausgegeben wird, und/oder dass das Abweichungssignal (fault) mit einer Busnachricht über eine Diagnoseschnittstelle, über die keine Messdaten ausgegeben werden, des Coriolis-Massedurchflussmessgeräts (2) ausgegeben wird, und/oder dass das Abweichungssignal (fault) codiert als Stromwert über eine Stromschnittstelle des Coriolis-Massedurchflussmessgeräts (2) ausgegeben wird.

8. Coriolis-Massedurchflussmessgerät (2) mit wenigstens einem Messrohr, wenigstens einem Schwingungserzeuger, wenigstens zwei Schwingungsaufnehmem (3a, 3b) und wenigstens einer Steuer- und Auswerteeinheit (5), wobei das Messrohr von einem Medium durchströmbar ist, wobei der Schwingungserzeuger das Messrohr zu einer Schwingung anregt, wobei der erste und der zweite Schwingungsaufnehmer (3a, 3b) die Schwingungen des Messrohrs einlaufseitig und auslaufseitig erfassen und als erstes Schwingungssignal (s1) und als zweites Schwingungssignal (s2) bereitstellen, wobei das erste Schwingungssignal (s1) über einen ersten Multiplexer (4a) in einer Messbetriebstellung (WPM) des ersten Multiplexers (4a) zumindest mittelbar zu der Steuer- und Auswerteeinheit (5) übertragen wird und wobei das zweite Schwingungssignal (s2) über einen zweiten Multiplexer (4b) in einer Messbetriebstellung (WPM) des zweiten Multiplexers (4b) zumindest mittelbar zu der Steuer- und Auswerteeinheit (5) übertragen wird und wobei die Steuer- und Auswerteeinheit (5) eine Schwingungssignal-Phasendifferenz (Δφ) zwischen dem übertragenen ersten Schwingungssignal (st1) und dem übertragenen zweiten Schwingungssignal (st2) bestimmt und aus der Schwingungssignal-Phasendifferenz (Δφ) einen Massedurchfluss ermittelt,
**dadurch gekennzeichnet,**
**dass** das erste Schwingungssignal (s1) um einen Phasenhub (cph) phasenverschoben wird und das phasenverschobene erste Schwingungssignal (s1) über den ersten Multiplexer (4a) zumindest mittelbar zur Steuer- und Auswerteeinheit (5) übertragen wird und die Steuer- und Auswerteeinheit (5) unter Berücksichtigung des um den Phasenhub (cph) verschobenen und übertragenen ersten Schwingungssignals (st1) den Massedurchfluss ermittelt und dass die Steuerund Auswerteeinheit (5) durch Vergleich der Schwingungssignal-Phasendifferenz (Δφ) mit dem Phasenhub (cph) des ersten Schwingungssignals (s1) detektiert, ob eine Betriebstellung (WP) des ersten Multiplexers (4a) und eine Betriebstellung (WP) des zweiten Multiplexers (4b) gleichzeitig die Messbetriebstellung (WPM) sind.

9. Coriolis-Massedurchflussmessgerät (2) nach Anspruch 8, **dadurch gekennzeichnet, dass** die Steuer- und Auswerteeinheit (5) so ausgebildet ist, dass sie im Betrieb des Coriolis-Massedurchflussmessgeräts (2) das Verfahren (1) gemäß einem der Patentansprüche 2 bis 7 ausführt.

10. Coriolis-Massedurchflussmessgerät (2) nach Anspruch 8 oder 9, **dadurch gekennzeichnet, dass** der Phasenhub (cph) mit einem Phasenschieber (6) erzeugt wird, insbesondere wobei der Phasenhub (φh) 180° beträgt und der Phasenschieber (6) ein analoger Inverter ist.

11. Coriolis-Massedurchflussmessgerät (2) nach Anspruch 8 oder 9, **dadurch gekennzeichnet, dass** der Phasenhub (cph) 180° beträgt und dadurch realisiert ist, dass der erste Schwingungsaufnehmer (3a) und der zweite Schwingungsaufnehmer (3b) so montiert oder angeschlossen sind, dass die von ein und derselben Schwingung des Messrohrs verursachten Schwingungssignale 180° phasenverschoben sind, insbesondere indem Spulen als Schwingungsaufnehmer (3a, 3b) umgekehrt orientiert an dem Messrohr angebracht sind oder indem Spulen als Schwingungsaufnehmer (3a, 3b) zwar gleichorientiert an dem Messrohr angebracht sind, die Anschlüsse der ersten Spule als erster Schwingungsaufnehmer (3a) aber vertauscht mit Anschlüssen des ersten Multiplexers (4a) verbunden sind im Vergleich zu der Verbindung der Anschlüsse der zweiten Spule als zweiter Schwingungsaufnehmer (3b) mit den Anschlüssen des zweiten Multiplexers (4b).
